# FASCICULE DE BREVET EUROPEEN

(11) **EP 1 067 037 B1**
(45) Date de publication et mention de la délivrance du brevet: **23.03.2005**
(21) Numéro de dépôt: 00420152.1
(22) Date de dépôt: 05.07.2000
(51) Int. Cl.: B62D 3/12, F16H 55/28

(54) **Mécanisme de direction à crémaillère pour véhicule automobile**
Zahnstangenlenkung für ein Kraftfahrzeug
Rack and pinion steering for a motor vehicle

(30) Priorité: 06.07.1999 FR 9908977
(43) Date de publication de la demande: 10.01.2001
(73) Titulaire: Société de Mécanique d'Irigny, 69540 Irigny (FR)
(72) Inventeur: Pantale, M. David, 69126 Brindas (FR)
(74) Mandataire: Bratel, Gérard

(56) Documents cités:
- EP-A- 0 770 538
- FR-A- 1 523 407
- FR-A- 1 563 134
- FR-A- 2 219 868

## Description

La présente invention concerne de façon générale les directions à crémaillère, pour véhicules automobiles ; elle se rapporte, plus particulièrement, au mécanisme prévu dans de telles directions pour ajuster la position et la pression de la crémaillère contre le pignon, lié à la colonne de direction, avec lequel la crémaillère doit être maintenue en prise avec un effort contrôlé.

Pour obtenir un fonctionnement satisfaisant d'un mécanisme de direction à crémaillère, il est nécessaire de maintenir le pignon et la crémaillère en engrènement, en corrigeant les jeux éventuels et en guidant la crémaillère avec un effort de coulissement contrôlé. A cet effet, dans la technique actuelle, il est généralement fait appel à une pièce mobile appelée poussoir, combinée avec des moyens élastiques tels que rondelle élastique ou ressort en appui sur un bouchon vissé sur le carter de direction, un exemple de ce genre de réalisation étant donné par la demande de brevet européen N° 0 860 345.

Dans un autre type de réalisation (voir demande de brevet français N° 2 663 284), la pièce poussoir habituelle est remplacée par des doigts élastiques, moulés d'une seule pièce avec le carter de direction en matière synthétique. Les doigts élastiques viennent en appui sur la crémaillère, à l'opposé de sa denture. Un bouchon, vissé sur le carter, comporte des prolongements flexibles, dirigés vers l'intérieur du carter, qui appuient élastiquement les doigts précités sur la crémaillère, la force de pression étant réglable par le vissage plus ou moins profond du bouchon.

Dans tous les cas, le dispositif considéré comporte plusieurs organes, tels que le poussoir ou équivalent et le bouchon, disposés suivant une ligne perpendiculaire à l'axe longitudinal de la crémaillère, l'ensemble ainsi constitué possédant toujours un encombrement non négligeable qui pose des problèmes pour son intégration dans le véhicule concerné.

Une autre solution connue consiste à remplacer le dispositif de poussoir ou équivalent, servant à maintenir la crémaillère en prise avec le pignon, par une bague comportant une ouverture circulaire excentrée traversée par la crémaillère, la bague étant montée, dans une position réglable angulairement, dans un logement cylindrique correspondant ménagé à une extrémité du carter de direction. La rotation de la bague, avant son immobilisation, permet d'ajuster le jeu entre la crémaillère et le pignon, grâce à l'ouverture de ladite bague qui est excentrée par rapport à son axe central. On obtient ainsi un dispositif relativement simple, économique et de faible encombrement, comparativement aux dispositifs de poussoir précédemment évoqués.

A titre d'exemples de dispositifs comportant une bague avec ouverture excentrée, ou similaire, du genre indiqué ci-dessus, il est fait référence à la demande de brevet européen N° 0770538, et à la demande de brevet français N° 2219868.

Dans la réalisation selon la demande de brevet européen N° 0770538, l'organe à partie excentrée se présente comme un manchon très allongé, plutôt que comme une bague. La partie concentrique interne de cet organe peut posséder une élasticité, pour des raisons de facilité de montage et/ou de maintien en place. Par contre, la partie fonctionnelle excentrée n'est pas rendue élastique, et elle se trouve au contraire rigidifiée par une bague métallique.

Dans la demande de brevet français précitée N° 2219868, le matériau constitutif de la bague excentrée n'est pas défini, et ce matériau est ainsi supposé rigide. Ce document prévoit aussi, en variante, que la bague excentrée puisse être remplacée par une pièce non circulaire, sollicitée par un ressort et non immobilisée en rotation dans le carter. Un tel dispositif n'appartient pas au genre concerné par la présente invention, et sa réalisation mécanique reste relativement complexe.

Un autre exemple de bagues excentrées, pouvant être élastiques, est donné par le document FR-A-1563164 (figure 2). Le même document montre par ailleurs (figures 3 et suivantes) une crémaillère, dont la flexion est réglable par le fait qu'elle traverse des paliers ou bagues élastiques placées aux deux extrémités du carter, et à distance du pignon. Les deux bagues ou paliers élastiques peuvent ici basculer, pour s'adapter à la flexion de la crémaillère, mais leur fonction n'est pas de maintenir la crémaillère en engrènement avec le pignon.

Le document FR-A-1477739 montre une direction à crémaillère, selon le préambule de la revendication 1, qui traverse deux bagues excentrées placées aux extrémités du carter, et associées respectivement à deux poussoirs.

La présente invention vise à perfectionner les dispositifs à bague excentrée, de manière à permettre le rattrapage des jeux de fonctionnement et de l'usure, durant toute la durée de vie de la bague, sans nécessité de remplacement de ladite bague ou de modification de son réglage.

A cet effet, l'invention a pour objet un mécanisme de direction à crémaillère du genre considéré, c'est-à-dire comportant, en tant que moyens pour maintenir la crémaillère en prise avec le pignon, au moins une bague avec ouverture excentrée, traversée par la crémaillère, la bague étant montée, dans une position réglable angulairement, dans un logement cylindrique correspondant ménagé à une extrémité du carter de direction, ce mécanisme étant caractérisé par le fait que lesdits moyens sont constitués par une bague élastique, cette bague élastique étant reçue dans une partie de carter qui renferme aussi le pignon.

L'élasticité de la bague permet ainsi de compenser les variations d'entraxe entre le pignon et la crémaillère, lors du déplacement de cette dernière. Elle permet aussi le rattrapage permanent des jeux de fonctionnement et de l'usure, sans modifier le réglage de la bague, laquelle peut rester immobilisée en rotation relativement au carter, par exemple par collage, une fois le réglage initial effectué.

La bague avec ouverture excentrée peut être constituée de deux ou plusieurs parties annulaires, globalement coaxiales, dont l'une au moins est réalisée en un matériau élastique.

Au lieu d'être réalisée pleine ou massive, la bague avec ouverture excentrée peut aussi comporter des formes, en particulier des évidements de matière, qui rendent cette bague élastique.

Avantageusement, la bague avec ouverture excentrée est réalisée en matière synthétique ou composite, ou autre matière à faible coefficient de frottement.

La face intérieure de cette bague, délimitant son ouverture excentrée, peut être une face lisse. Elle peut aussi, en variante, comporter une ou plusieurs gorges annulaires, constituant réserve de graisse.

De toute façon, l'invention sera mieux comprise à l'aide de la description qui suit, en référence au dessin schématique annexé représentant, à titre d'exemples, quelques formes d'exécution de ce mécanisme de direction à crémaillère pour véhicule automobile :
Figure 1 est une vue partielle, et partiellement en coupe, d'une direction de véhicule pourvue du dispositif objet de l'invention ;
Figure 2 est une vue en coupe transversale du mécanisme, suivant II-II de figure 1 ;
Figure 3 est une vue de face, à plus grande échelle, de la bague avec ouverture excentrée ;
Figure 4 est une vue en coupe passant par l'axe de cette bague, suivant IV-IV de figure 3 ;
Figure 5 est une vue en coupe similaire à figure 4, illustrant une première variante de la bague ;
Figure 6 est une vue en coupe similaire aux précédentes, illustrant une autre variante de la bague ;
Figure 7 est une vue en coupe similaire aux précédentes, illustrant encore une autre variante de la bague ;
Figure 8 est une vue en coupe similaire aux précédentes, illustrant une dernière variante de la bague.

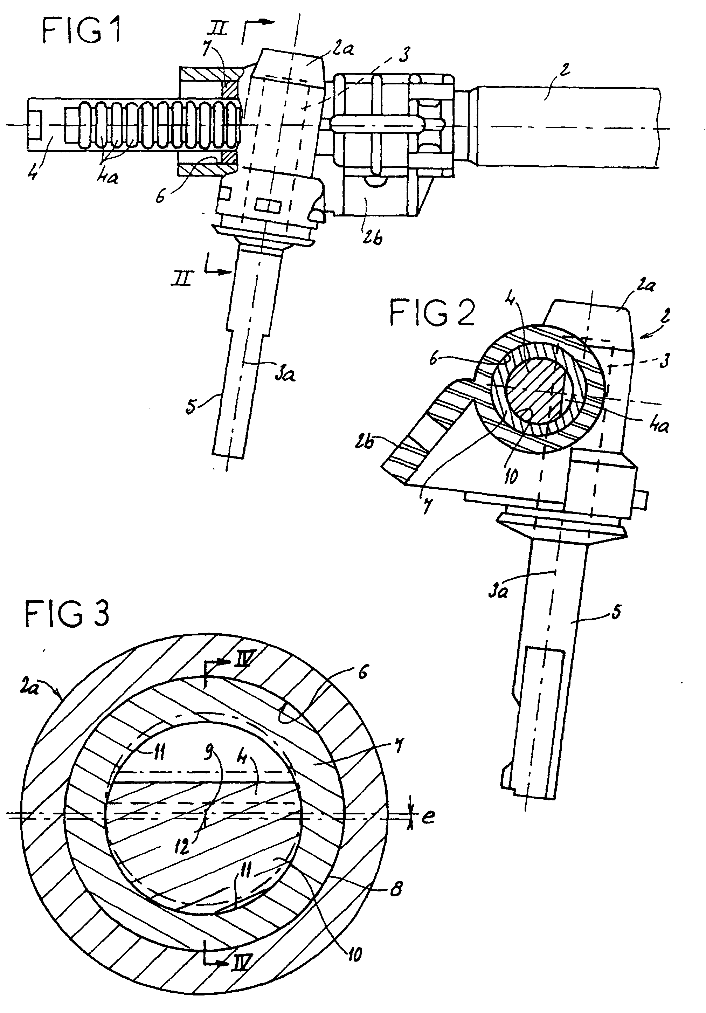

La figure 1 représente extérieurement, et avec une coupe partielle, une partie d'une direction à crémaillère de véhicule automobile, dont elle montre le carter central tubulaire 2, pourvu d'une partie terminale 2a qui renferme un pignon rotatif 3 d'axe 3a, en prise avec une crémaillère coulissante 4. Le pignon 3 possède un arbre 5 sortant à l'extérieur de la partie de carter 2a, et accouplé à la colonne de direction, ici non représentée. Le carter 2, 2a comporte aussi une patte-support 2b (voir figure 2). La crémaillère 4, dont la denture est indiquée en 4a, possède une section partiellement circulaire, comme le montre la figure 2.

La partie de carter 2a présente, dans une région correspondant à l'extrémité du carter 2, un logement cylindrique 6 recevant une bague 7, visible plus en détail sur la figure 3. La bague 7 possède une face extérieure cylindrique 8, dont l'axe central est indiqué en 9, et qui vient en contact avec la paroi du logement 6, de même diamètre. Dans la bague 7 est ménagée une ouverture circulaire 10, délimitée par une face intérieure cylindrique 11 dont le diamètre est égal au diamètre de la section partiellement circulaire de la crémaillère 5. L'ouverture circulaire 10 de la bague 7 est excentrée, c'est-à-dire que l'axe 12 de cette ouverture 10 possède un décalage (excentricité) par rapport à l'axe central 9 de ladite bague 7.

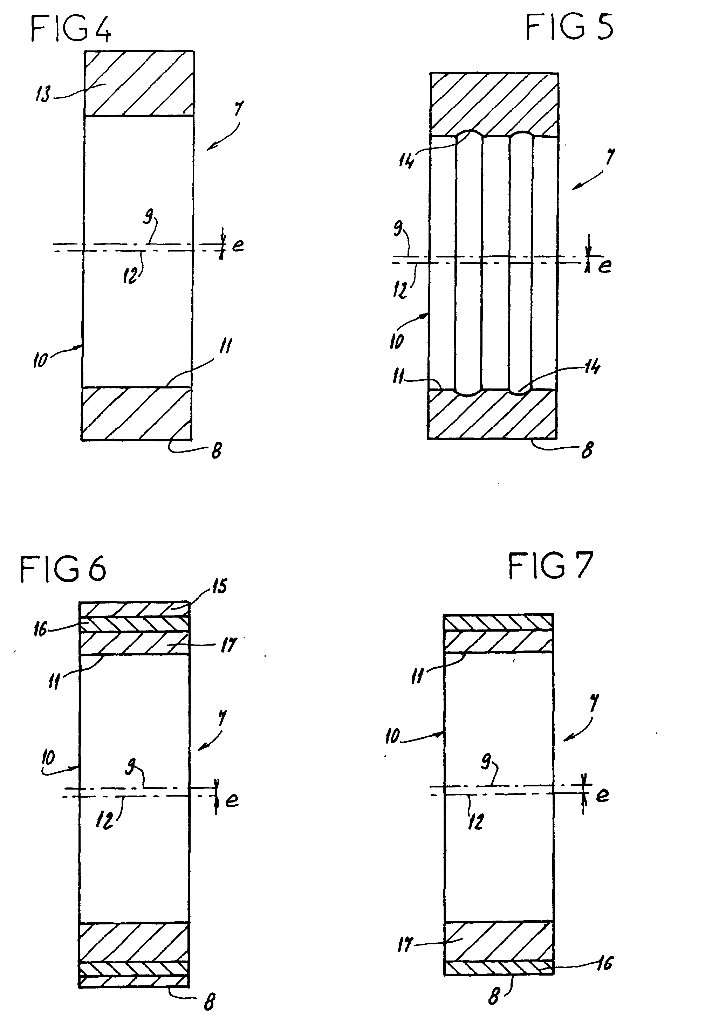

La crémaillère 4 traverse de part en part l'ouverture circulaire excentrée 10 de la bague 7, montée dans le logement cylindrique correspondant 6 du carter 2. Selon la position angulaire de la bague 7, et compte tenu de l'excentration de l'ouverture 10, la crémaillère 4 peut être positionnée de façon variable, son axe (confondu avec l'axe 12 de l'ouverture 10) étant plus ou moins rapproché de l'axe 3 du pignon. La figure 4 illustre deux positions possibles de la bague 7 et de la crémaillère 4.

Ainsi, la rotation de la bague 7 permet d'ajuster la position de la crémaillère 4 relativement au pignon 3, dans la zone où la crémaillère 4 vient en prise avec le pignon 3. Ce réglage étant effectué, la bague 7 est immobilisée en rotation relativement au carter 2, notamment par collage dans le cas d'un carter 2 en matière synthétique ou composite, ou par tous autres moyens d'immobilisation.

Dans le mode de réalisation selon les figures 3 et 4, la bague 7 possède une face cylindrique intérieure 11, délimitant l'ouverture excentrée 10, qui est une face lisse. De plus, cette bague 7 possède une structure massive, et est constituée d'une seule matière 13, qui est notamment une matière synthétique ou composite à faible coefficient de frottement.

La figure 5 illustre une première variante de la bague 7, dans laquelle deux gorges annulaires 14 sont creusées dans la face intérieure 11 qui délimite l'ouverture excentrée 10. Les deux gorges 14, espacées axialement, servent ici de réserve de graisse.

La figure 6 illustre une deuxième variante de la bague 7, composée de trois parties annulaires 15, 16 et 17 sensiblement coaxiales, pouvant toutefois être légèrement décalées les unes par rapport aux autres, compte tenu de l'excentration de l'ouverture 10. La partie annulaire extérieure 15 et la partie annulaire intérieure 17 sont réalisées en une matière rigide. La partie annulaire intermédiaire 16 est réalisée en un matériau à propriétés élastiques, permettant de compenser les variations d'entraxe entre le pignon et la crémaillère 4, lors du déplacement en translation de celle-ci.

La figure 7 illustre une troisième variante de la bague 7, découlant de la précédente. Cette bague 7 est composée de deux parties annulaires 16 et 17, à savoir une partie annulaire extérieure 16 en matériau à propriétés élastiques, et une partie annulaire intérieure 17 en matière rigide.

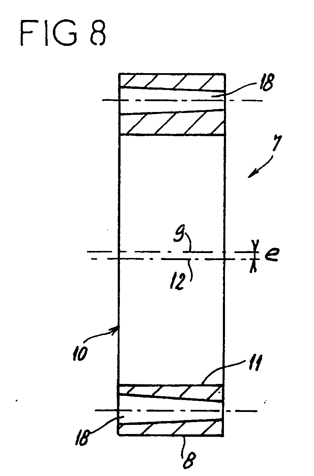

La figure 8 illustre une quatrième variante de la bague 7. Dans celle-ci, la bague 7 n'est pas pleine ou massive, mais elle comporte, au contraire, des évidements de matière 18. Une telle conformation avec évidements rend cette bague 7 élastique.

Les diverses variantes précédemment indiquées peuvent être combinées ; par exemple, une ou plusieurs gorges annulaires (telles que les gorges 14 de la figure 5) peuvent aussi être creusées dans la partie annulaire intérieure 17 des bagues selon les figures 6 ou 7.

Le dispositif, précédemment décrit, est applicable à des directions à crémaillère de tous types, notamment des directions manuelles mais aussi des directions assistées hydrauliques ou électriques.

L'on ne s'éloignerait pas du cadre de l'invention, telle que définie dans les revendications annexées, en modifiant les détails de forme et/ou la ou les matière(s) constitutive(s) de la bague, pourvu que celle-ci comporte une ouverture circulaire excentrée et soit au moins partiellement rendue élastique, ou encore en utilisant tout moyen, autre que collage, pour l'immobilisation en rotation de cette bague après réglage.

## Revendications

1. Mécanisme de direction à crémaillère pour véhicule automobile, comportant à l'intérieur d'un carter de direction (2, 2a) des moyens pour maintenir la crémaillère (4) en prise avec le pignon (3) lié à la colonne de direction, avec possibilité de réglage du jeu, ces moyens étant constitués par au moins une bague (7) comportant une ouverture circulaire (10) excentrée traversée par la crémaillère (4), la bague (7) étant montée, dans une position réglable angulairement, dans un logement cylindrique (6) correspondant ménagé à une extrémité du carter de direction (2, 2a), **caractérisé en ce que**: lesdits moyens sont constitués par une bague élastique, cette bague élastique (7) étant reçue dans une partie de carter (2a) qui renferme aussi le pignon (3).

2. Mécanisme de direction à crémaillère selon la revendication 1, **caractérisé en ce que** la bague (7) avec ouverture excentrée (10) est constituée de deux ou plusieurs parties annulaires (15, 16, 17), globalement coaxiales, l'une au moins (16) de ces parties annulaires étant réalisée en un matériau élastique.

3. Mécanisme de direction à crémaillère selon la revendication 1, **caractérisé en ce que** la bague (7) avec ouverture excentrée (10) comporte des évidements de matière (18) qui la rendent élastique.

4. Mécanisme de direction à crémaillère selon l'une quelconque des revendications 1 à 3, **caractérisé en ce que** la bague (7) avec ouverture excentrée (10) est réalisée en matière synthétique ou composite, ou autre matière à faible coefficient de frottement.

5. Mécanisme de direction à crémaillère selon l'une quelconque des revendications 1 à 4, **caractérisé en ce que** la face intérieure de la bague (7), délimitant son ouverture excentrée (10), est une face lisse (11).

6. Mécanisme de direction à crémaillère selon l'une quelconque des revendications 1 à 4, **caractérisé en ce que** la face intérieure de la bague (7), délimitant son ouverture excentrée (10), comporte une ou plusieurs gorges annulaires (14), constituant réserve de graisse.

7. Mécanisme de direction à crémaillère selon l'une quelconque des revendications 1 à 6, **caractérisé en ce que** la bague (7) est immobilisée en rotation relativement au carter (2, 2a), dans la position angulaire réglée, par collage.

## Patentansprüche

1. Lenkungsvorrichtung mit Zahnstange für Kraftfahrzeuge, die im Inneren eines Lenkungsgehäuses (2, 2a) Einrichtungen umfasset, um die Zahnstange (4) mit dem mit der Lenksäule verbundenen Ritzel (3) mit der Möglichkeit, ein Spiel einzustellen, in Eingriff zu halten, wobei diese Einrichtungen aus mindestens einem Ring (7) gebildet sind, der eine kreisförmige, außermittige bzw. exzentrische Öffnung (10) umfasst, die von der Zahnstange (4) durchquert wird, wobei der Ring (7) in einer winkeleinstellbaren Position in einer entsprechenden zylindrischen Aufnahme (6) angebracht ist, die an einem Ende des Lenkungsgehäuses (2, 2a) ausgebildet ist, **dadurch gekennzeichnet, dass**
die Einrichtungen aus einem elastischen Ring bestehen, wobei dieser elastische Ring (7) in einem Gehäuseteil (2a) aufgenommen ist, der auch das Ritzel (3) einschließt.

2. Lenkungsvorrichtung mit Zahnstange nach Anspruch 1,
**dadurch gekennzeichnet, dass**
der Ring (7) mit der außermittigen Öffnung (10) aus zwei oder mehreren Ringteilen (15, 16, 17) besteht, die insgesamt koaxial sind, wobei mindestens eines (16) dieser Ringteile aus einem elastischen Material hergestellt ist.

3. Lenkungsvorrichtung mit Zahnstange nach Anspruch 1,
**dadurch gekennzeichnet, dass**
der Ring (7) mit der außermittigen Öffnung (10) Materialaussparungen (18) umfasst, die ihn elastisch machen.

4. Lenkungsvorrichtung mit Zahnstange nach einem der Ansprüche 1 bis 3,
**dadurch gekennzeichnet, dass**
der Ring (7) mit der außermittigen Öffnung (10) aus einem synthetischen oder Verbund-Material oder einem anderen Material mit niedrigem Reibungskoeffizienten hergestellt ist.

5. Lenkungsvorrichtung mit Zahnstange nach einem der Ansprüche 1 bis 4,
**dadurch gekennzeichnet, dass**
die Innenfläche des Rings (7), die seine außermittige Öffnung (10) begrenzt, eine glatte Fläche (11) ist.

6. Lenkungsvorrichtung mit Zahnstange nach einem der Ansprüche 1 bis 4,
**dadurch gekennzeichnet, dass**
die Innenfläche des Rings (7), die seine außermittige Öffnung (10) begrenzt, eine oder mehrere ringförmige Auskehlungen (14) umfasst, die ein Schmiermittelreservoir bilden.

7. Lenkungsvorrichtung mit Zahnstange nach einem der Ansprüche 1 bis 6,
**dadurch gekennzeichnet, dass**
der Ring (7) bezüglich des Gehäuses (2, 2a) in der eingestellten Winkelposition durch Halten bzw. Verkleben drehbewegungsfixiert ist.

## Claims

1. A rack and pinion steering mechanism for an automobile vehicle, comprising, in the interior of a steering housing (2, 2a), means for maintaining the rack (4) in engagement with the pinion (3) which is attached to the steering column, with the possibility of adjusting the play, said means being formed by at least one ring (7) comprising an eccentric circular opening (10) through which the rack (4) passes, the ring (7) being mounted in an angularly adjustable position in a corresponding cylindrical receiver (6) disposed at one end of the steering housing (2, 2a), **characterised in that** said means are formed by an elastic ring, said elastic ring (7) being received in a housing part (2a) which also contains the pinion (3).

2. A rack and pinion steering mechanism according to claim 1, **characterised in that** the ring (7) comprising the eccentric opening (10) is formed from two or more annular parts (15, 16, 17), which are coaxial overall, at least one (16) of said annular parts being made of an elastic material.

3. A rack and pinion steering mechanism according to claim 1, **characterised in that** the ring (7) comprising the eccentric opening (10) comprises cavities in the material (18) which make it elastic.

4. A rack and pinion steering mechanism according to any one of claims 1 to 3, **characterised in that** the ring (7) comprising an eccentric opening (10) is made of a synthetic or composite material or of another material having a low coefficient of friction.

5. A rack and pinion steering mechanism according to any one of claims 1 to 4, **characterised in that** the internal face of the ring (7) which delimits its eccentric opening (10) is a smooth face (11).

6. A rack and pinion steering mechanism according to any one of claims 1 to 4, **characterised in that** the internal face of the ring (7) which delimits its eccentric opening (10) comprises one or more annular grooves (14) forming a reserve of grease.

7. A rack and pinion steering mechanism according to any one of claims 1 to 6, **characterised in that** the ring (7) is fixed in rotation in the set angular position in relation to the housing (2, 2a) by adhesive bonding.
